# EUROPEAN PATENT SPECIFICATION

(11) **EP 4 142 018 B1**
(45) Date of publication and mention of the grant of the patent: **14.08.2024**
(21) Application number: 22192723.9
(22) Date of filing: 30.08.2022
(51) Int. Cl.: H01M 10/625, H01M 10/647, H01M 10/658, H01M 50/211, H01M 50/222, H01M 50/227, H01M 50/249, H01M 50/264, H01M 50/503, H01M 50/505, H01M 50/517, H01M 50/522, H01M 50/548, H01M 50/557, H01M 50/562

(54) **BATTERY MODULE**
BATTERIEMODUL
MODULE DE BATTERIE

(30) Priority: 30.08.2021 KR 20210114454
(43) Date of publication of application: 01.03.2023
(73) Proprietor: SK On Co., Ltd., Seoul 03161 (KR)
(72) Inventor: CHOI, Ha Neul, Daejeon 34124 (KR); KO, Jeong Woon, Daejeon 34124 (KR); YUN, Ja Sung, Daejeon 34124 (KR); JUNG, Hyun Jae, Daejeon 34124 (KR)
(74) Representative: Bird & Bird LLP

(56) References cited:
- WO-A1-2020/246721
- DE-U1- 202021 100 964
- KR-A- 20210 092 039
- US-A1- 2020 106 074

## Description

This application claims the priority benefit of Korean Patent Application No. 10-2021-0114454 filed on August 30, 2021.

### TECHNICAL FIELD

The present disclosure relates to a battery module, and more particularly to a battery module including a cell assembly on which a plurality of battery cells are stacked.

### BACKGROUND

As technology development and demand for mobile devices and electric vehicles increase, a demand for battery cells as an energy source is rapidly increasing. The battery cell is a battery capable of repeating charging and discharging because an interconversion between chemical energy and electrical energy is reversible.

A plurality of battery modules, each of which is mounted with the plurality of battery cells, may be mounted on an electric vehicle to implement a battery pack.

Recently, when battery cells are installed in the electric vehicle, a technology (called Cell-to-Pack (CTP) technology) has been presented to omit a process of manufacturing and installing battery modules mounted with the battery cells and form a battery pack by directly installing the battery cells in the electric vehicle.

However, the battery cells generate heat while going through charging and discharging. Hence, there occurs a thermal runaway in which any one of the battery cells explodes due to an increase in a temperature of the battery cells, and gas, etc. is generated in the battery pack due to the thermal runaway.

In particular, as the gas is discharged to a tab of a battery cell having a smallest flow resistance, direct heat propagation to other battery cells is generated through tabs adjacent to each other. As a result, there is a problem in that all the battery cells are burned out at once.

Patent document KR20210092039A discloses a battery module comprising a cell assembly including a plurality of pouch battery cells, Also disclosed is a bus bar frame including a plurality of slits in which the electrode leads are inserted into, where a bus bar is said to be in contact with the electrode leads.

### SUMMARY

The invention is defined in claim 1.

An aspect of the present disclosure provides a battery module capable of blocking a gas from generating heat propagation to other battery cell through electrode leads of an electrode assembly by disposing a guide member between the electrode assembly and a bus bar unit.

An aspect of the present disclosure also provides a battery module capable of exhausting a gas generated due to thermal runaway of a battery cell to the outside by inducing the thermal runaway of the battery cell in one direction.

In order to achieve the above-described and other objects and needs, in one aspect of the present disclosure, there is provided a battery module comprising a cell assembly including a plurality of battery cells, each of the plurality of battery cells including: an electrode accommodation portion accommodating an electrode assembly, and an electrode lead protruding from the electrode accommodation portion and coupled to the electrode assembly; a module housing accommodating the cell assembly; a bus bar unit including: a plurality of slits in which the electrode leads are inserted respectively, and a bus bar coupled to the electrode leads; and a guide member positioned between the electrode accommodation portion and the bus bar unit, the guide member including a plurality of openings through which the electrode leads pass.

According to an aspect of the present disclosure, the present disclosure can allow a gas to be discharged to the outside of a bus bar by blocking a flow path generated inside a tab (i.e., bus bar) of a battery cell through a flow resistance increase object.

According to an aspect of the present disclosure, the present disclosure can prevent a rapid heat transfer of battery cells by preventing a direct heat transfer through a tab of each battery cell.

### BRIEF DESCRIPTION OF THE DRAWINGS

The accompanying drawings, which are included to provide a further understanding of the disclosure and are incorporated in and constitute a part of the disclosure, illustrate embodiments of the disclosure and together with the description serve to explain the principle of the disclosure.
FIG. 1 is a perspective view illustrating a battery module according to an embodiment of the present disclosure.
FIG. 2 is an exploded perspective view illustrating a unit cell assembly and a guide member of the battery module of FIG. 1.
FIG. 3 is an enlarged view of a part 'A' of the battery module of FIG. 1.
FIG. 4 illustrates an electrode lead, a bus bar unit, and a support frame of the battery module of FIG. 1.
FIG. 5 is a perspective view illustrating the inside of a battery module including a bracket.
FIG. 6 is a cross-sectional view illustrating a support frame with bus bar unit through holes.

### DETAILED DESCRIPTION

Reference will now be made in detail to embodiments of the disclosure, examples of which are illustrated in the accompanying drawings. Wherever possible, the same reference numbers will be used throughout the drawings to refer to the same or like parts. In general, a suffix such as "module" and "unit" may be used to refer to elements or components. Use of such a suffix herein is merely intended to facilitate description of the present disclosure, and the suffix itself is not intended to give any special meaning or function. It will be noted that a detailed description of known arts will be omitted if it is determined that the detailed description of the known arts can obscure the embodiments of the disclosure. The accompanying drawings are used to help easily understand various technical features and it should be understood that embodiments presented herein are not limited by the accompanying drawings. As such, the present disclosure should be construed to extend to any alterations, equivalents and substitutes in addition to those which are particularly set out in the accompanying drawings.

The terms including an ordinal number such as first, second, etc. may be used to describe various components, but the components are not limited by such terms. The terms are used only for the purpose of distinguishing one component from other components.

When any component is described as "being connected" or "being coupled" to other component, this should be understood to mean that another component may exist between them, although any component may be directly connected or coupled to the other component. In contrast, when any component is described as "being directly connected" or "being directly coupled" to other component, this should be understood to mean that no component exists between them.

A singular expression can include a plural expression as long as it does not have an apparently different meaning in context.

In the present disclosure, terms "include" and "have" should be understood to be intended to designate that illustrated features, numbers, steps, operations, components, parts or combinations thereof are present and not to preclude the existence of one or more different features, numbers, steps, operations, components, parts or combinations thereof, or the possibility of the addition thereof.

In the drawings, sizes of the components may be exaggerated or reduced for convenience of explanation. For example, the size and the thickness of each component illustrated in the drawings are arbitrarily illustrated for convenience of explanation, and thus the present disclosure is not limited thereto unless specified as such.

If any embodiment is implementable differently, a specific order of processes may be performed differently from the order described. For example, two consecutively described processes may be performed substantially at the same time, or performed in the order opposite to the described order.

In the following embodiments, when layers, areas, components, etc. are connected, the following embodiments include both the case where layers, areas, and components are directly connected, and the case where layers, areas, and components are indirectly connected to other layers, areas, and components intervening between them. For example, when layers, areas, components, etc. are electrically connected, the present disclosure includes both the case where layers, areas, and components are directly electrically connected, and the case where layers, areas, and components are indirectly electrically connected to other layers, areas, and components intervening between them.

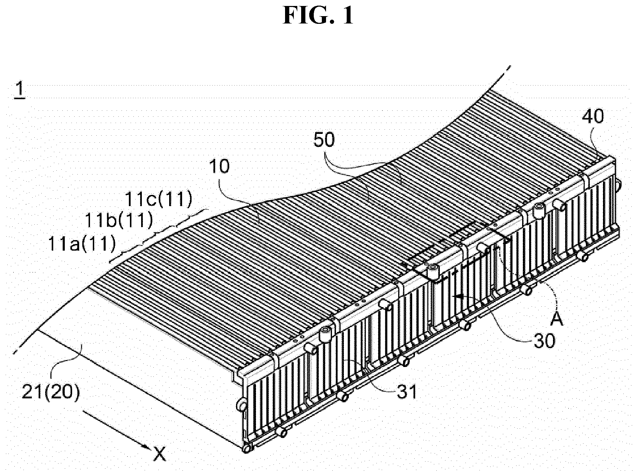

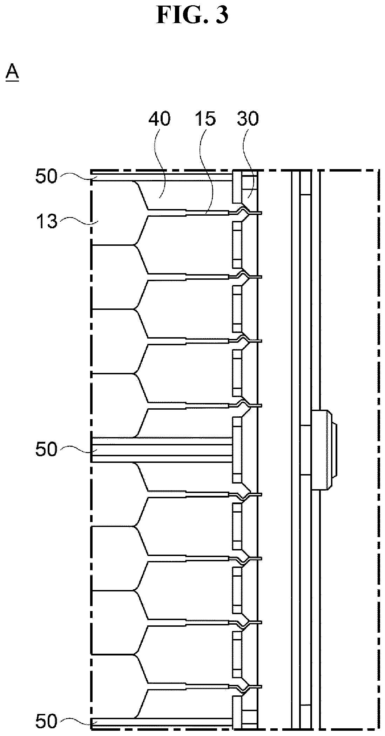

Referring to FIGS. 1 to 3, a battery module 1 may include a cell assembly 11 formed by stacking a plurality of battery cells 10. The cell assembly 11 is formed by stacking the plurality of battery cells 10. The battery cells 10 may be stacked in one direction. In this case, the stacking direction of the battery cells 10 may be variously designed and changed, if necessary or desired.

Each battery cell 10 may be a pouch-type secondary battery, i.e., a pouch-type battery cell 10 in which an electrode assembly (not shown) is accommodated in a pouch (exterior material). The pouch-type battery cell 10 may include an electrode accommodation portion 13 accommodating the electrode assembly therein, and an electrode lead 15 that is connected to the electrode assembly and protrudes from the electrode accommodation portion 13 to the outside.

The battery cell 10 may have a shape extending in a longitudinal direction. For example, the battery cell 10 may have a shape extending in a direction X from a rear end to a front end of the battery cell 10. The longitudinal direction of the battery cell 10 may be a direction in which the electrode lead 15 protrudes from the electrode accommodation portion 13.

The battery cell 10 may have a flat shape. The plurality of battery cells 10 may be stacked. For example, the plurality of battery cells 10 may be sequentially stacked in a thickness direction of the battery cells 10. A width direction of the battery cell 10 may be parallel to a direction from a lower end of the battery cell 10 toward an upper end of the battery cell 10. The width direction of the battery cell 10 may be a direction transverse to the longitudinal direction of the battery cell 10.

The electrode assembly includes a plurality of electrode plates and electrode tabs and is accommodated in a pouch. Here, the electrode plate may include a positive electrode plate and a negative electrode plate, and the electrode assembly may be disposed such that the positive electrode plate and the negative electrode plate are stacked with a separator interposed therebetween in a state where wide surfaces of the positive electrode plate and the negative electrode plate face each other. The positive electrode plate and the negative electrode plate are formed as a structure in which an active material slurry is applied to a current collector. The slurry is generally formed by stirring a granular active material, an auxiliary conductor, a binder, and a plasticizer in a state in which a solvent is added. Further, in the electrode assembly, the plurality of positive electrode plates and the plurality of negative electrode plates may be stacked in one direction. In this instance, the plurality of positive electrode plates and the plurality of negative electrode plates are respectively provided with the electrode tabs, and each electrode tab may be connected to an electrode lead so that electrodes of the same polarity contact each other.

The battery module 1 may include a module housing 20. The module housing 20 may form an appearance of the battery module 1. The module housing 20 may accommodate the cell assembly 11. The module housing 20 may protect the battery cell 10 from an external environment.

The module housing 20 may include a lower plate (not shown) supporting a lower part of the cell assembly 11. The lower plate (not shown) may be positioned under the cell assembly 11.

The module housing 20 may include a side plate 21. The side plate 21 may form a shape extending upward from an end of the lower plate (not shown). A plurality of side plates 21 may be provided. For example, the plurality of side plates 21 may be formed to extend upward from two side ends of the lower plate (not shown). For example, the plurality of lateral plates 21 may include two lateral plates 21. For example, the two lateral plates 21 may be disposed in the thickness direction of the battery cell 10. Both lateral ends of the lower plate (not shown) may be spaced apart from each other and may face each other.

The module housing 20 may have a structure in which the lower plate and the lateral plate 21 are integrally formed. For another example, the side plate 21 and the lower plate may be independently formed and then combined to form the module housing 20. A front part and a rear part of the module housing 20 may be opened. A bus bar unit 30 may be coupled to the front part and the rear part of the module housing 20.

The module housing 20 may include a material with high thermal conductivity, such as metal. For example, the module housing 20 may include an aluminum material. However, the material of the module housing 20 is not limited thereto, and various materials may be used as long as the materials have a strength and thermal conductivity similar to those of a metal, even if the materials are not a metal.

The cell assembly 11 may be disposed in an inner space of the module housing 20.

A plurality of battery cells 10 may be provided. The plurality of battery cells 10 may form one cell assembly 11. In other words, the cell assembly 11 may be formed by stacking the plurality of battery cells 10.

The cell assembly 11 may include a plurality of unit cell assemblies 11a, 11b and 11c. Each of the plurality of unit cell assemblies 11a, 11b, and 11c may be formed by stacking the plurality of battery cells 10. For example, the cell assembly 11 may be divided into the plurality of unit cell assemblies 11a, 11b and 11c. In other words, the plurality of battery cells 10 may be grouped into the plurality of unit cell assemblies 11a, 11b and 11c.

The plurality of unit cell assemblies 11a, 11b and 11c may include, for example, a first unit cell assembly 11a, a second unit cell assembly 11b, and a third unit cell assembly 11c.

The first unit cell assembly 11a, the second unit cell assembly 11b, and the third unit cell assembly 11c may include the same number of battery cells. As another example, the first unit cell assembly 11a, the second unit cell assembly 11b, and the third unit cell assembly 11c may include a different number of battery cells. As another example, two unit cell assemblies of the first unit cell assembly 11a, the second unit cell assembly 11b, and the third unit cell assembly 11c may include the same number of battery cells and may include a different number of battery cells from the remaining unit cell assembly.

The battery module 1 may include a heat blocking member 50. The plurality of unit cell assemblies 11a, 11b and 11c may be divided by the heat blocking member 50. The heat blocking member 50 may be disposed between the plurality of unit cell assemblies 11a, 11b and 11c. For example, the heat blocking member 50 is disposed between the first unit cell assembly 11a and the second unit cell assembly 11b and can block heat transfer between the first unit cell assembly 11a and the second unit cell assembly 11b. The heat blocking member 50 may be disposed between both adjacent battery cells 10 and may contact the both adjacent battery cells 10.

The plurality of heat blocking members 50 may be provided. For example, one of the plurality of heat blocking members 50 may be disposed between the first unit cell assembly 11a and the second unit cell assembly 11b, and another heat blocking member 50 may be disposed between the second unit cell assembly 11b and the third unit cell assembly 11c.

The heat blocking member 50 is to prevent heat transfer between the both adjacent battery cells 10 and may have insulation and/or flame retardancy. The heat blocking member 50 may form a membrane shape or a film shape.

The battery module 1 includes the bus bar unit 30. The bus bar unit 30 may be coupled to the module housing 20. The electrode lead 15 of each of the plurality of battery cells 10 pass through the bus bar unit 30. The bus bar unit 30 may be spaced apart from the electrode assembly.

The bus bar unit 30 includes a bus bar (not shown). The bus bar (not shown) is electrically connected to each of the electrode leads 15.

The bus bar unit 30 may be coupled to one surface or both surfaces of the battery cell 10 on which the electrode lead 15 is disposed. The electrode lead 15 passes through the bus bar unit 30 and may be exposed from an outer surface of the bus bar unit 30. The outer surface of the bus bar unit 30 may be directed toward the outside of the module housing 20. The electrode leads 15 with the same polarity may be connected to each other by the bus bar (not shown) at the outer surface of the bus bar unit 30. To this end, the bus bar unit 30 may be provided with a slit 31 through which the electrode lead 15 passes.

The electrode lead 15 is coupled to the bus bar (not shown). The coupling between the electrode lead 15 and the bus bar (not shown) may be performed by welding in a state in which the electrode lead 15 passes through the slit 31, that is, in a state in which the electrode lead 15 protrudes to the outside of the bus bar. The plurality of slits 31 are provided. The plurality of slits 31 are disposed in the direction in which the plurality of battery cells 10 are stacked.

The battery module 1 includes a guide member 40. The guide member 40 is positioned inside the module housing 20. The guide member 40 is positioned between the cell assembly 11 and the bus bar unit 30. The guide member 40 fills between the electrode accommodation portion 13 and the bus bar unit 30 in a state where the electrode lead 15 passes through the slit 31 of the bus bar unit 30. That is, the guide member 40 fills a space between the electrode accommodation portion 13 and the bus bar unit 30.

The guide member 40 includes a plurality of openings 41. An end of each of the plurality of electrode leads 15 passes through the plurality of openings 41. The plurality of openings 41 are directed toward the bus bar unit 30. For example, the plurality of openings 41 respectively correspond to the plurality of slits 31. For example, the plurality of openings 41 face the plurality of slits 31. The plurality of electrode leads 15 pass through the openings 41 and pass through the slits 31 of the bus bar unit 30.

A thermal runaway phenomenon may occur in the battery cell 10. A high temperature gas generated inside the battery cell 10 in which the thermal runaway has occurred may be discharged from the electrode accommodation portion 13. In the related art, a plurality of electrode leads 15 of a plurality of battery cells 10 were spaced apart from each other, and a space was formed between the plurality of electrode leads 15. Hence, the gas moved between the electrode leads 15 having a relatively small flow path resistance, and heat could propagate to other battery cells.

On the other hands, the guide member 40 according to an embodiment of the present disclosure seals between the electrode leads 15 of the battery cells 10 adjacent to each other, and thus can prevent the gas from propagating heat to other battery cells 10. That is, the guide member 40 can prevent heat generated in one battery cell 10 from propagating to other battery cells 10.

The guide member 40 may include, for example, at least one of a fiber, an epoxy resin, a mica sheet, a ceramic pad, and a flame retardant rubber. For another example, the guide member 40 may include a heat insulation material in the form of a gel.

The guide member 40 may be coupled to at least two battery cells 10 of the plurality of battery cells 10 of the cell assembly 11. However, the present disclosure is not limited thereto, and the number of battery cells 10 to which one guide member 40 is coupled can be variously designed and changed.

The cell assembly 11 may be provided with the plurality of unit cell assemblies 11a, 11b and 11c. The heat blocking member 50 may be disposed between the adjacent unit cell assemblies 11a, 11b and 11c among the plurality of unit cell assemblies 11a, 11b and 11c.

The guide member 40 may be coupled to one unit cell assembly 11a, 11b or 11c. The guide member 40 is disposed between the adjacent heat blocking members 50 and can seal between the unit cell assemblies 11a, 11b and 11c and the bus bar unit 30.

The plurality of guide members 40 may be provided. The guide member 40 may correspond to one unit cell assembly 11a, 11b or 11c. The plurality of guide members 40 may be individually disposed while each guide member 40 is interposed between the adjacent heat blocking members 50. For example, the plurality of guide members 40 may be individually disposed to respectively correspond to the first unit cell assembly 11a, the second unit cell assembly 11b, and the third unit cell assembly 11c.

The gas generated due to thermal runaway of the battery cells 10 may be discharged to the outside through the openings 41 of the guide member 40. For example, the gas passing through the openings 41 may be discharged to the outside through the slits 31.

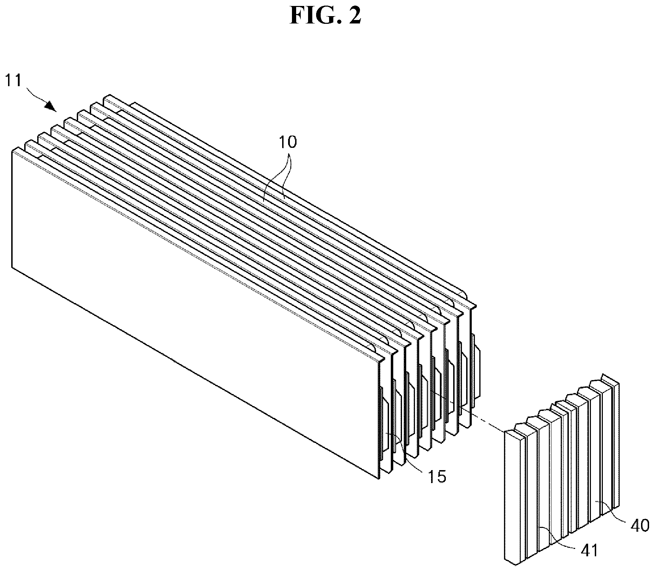

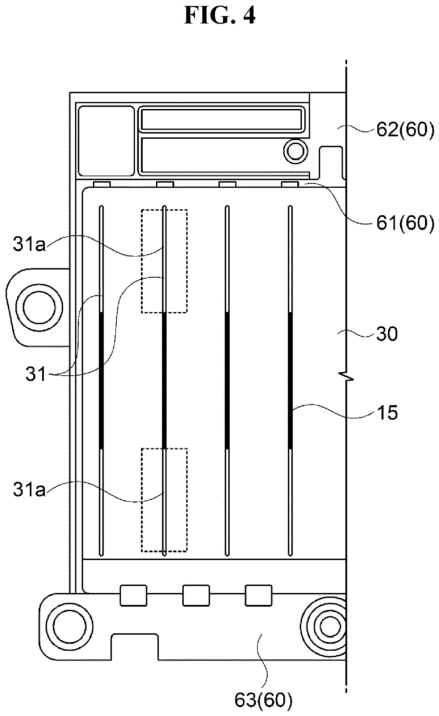

Referring to FIGS. 2 and 4, a length of the opening 41 in a transverse direction may be greater than a length of the electrode lead 15 in the transverse direction. For example, the length of the opening 41 in the transverse direction may be greater than the length of the end of the electrode lead 15 in the transverse direction. The gas generated in the battery cell 10 may be discharged to the outside through the opening 41. FIG. 4 illustrates a cross section of the battery module 1 (see FIG. 1).

The slit 31 of the bus bar unit 30 may correspond to the opening 41 of the guide member 40. A length of the slit 31 in the transverse direction may be greater than the length of the end of the electrode lead 15 in the transverse direction. The gas passing through the opening 41 may pass through the slit 31 and may be discharged to the outside.

The electrode lead 15 passing through the slit 31 may be coupled to the bus bar unit 30 through welding (e.g., laser welding, etc.). In this instance, if the electrode lead 15 is positioned differently from an initial setting position when the electrode lead 15 is inserted into the slit 31, an assembly tolerance may occur. In this case, since the length of the slit 31 in the transverse direction is greater than the length of the end of the electrode lead 15 in the transverse direction, an assembly failure due to the assembly tolerance can be prevented. Further, the electrode lead 15 can be more easily coupled to the bus bar (not shown).

The slit 31 may include a margin portion 31a. The margin portion 31a may be a portion of the slit 31 excluding a portion through which the end of the electrode lead 15 passes. The gas may be discharged to the outside through the margin portion 31a.

The battery module 1 may include a support frame 60. The support frame 60 may be coupled to the module housing 20. The support frame 60 may include a seating portion 61 on which the bus bar unit 30 is placed, and an upper extension 62 and a lower extension 63 that extend from the seating portion 61 in upper and lower directions, respectively. Each of the upper extension 62 and the lower extension 63 may be coupled to the module housing 20 by a coupling member such as a hook or a bolt.

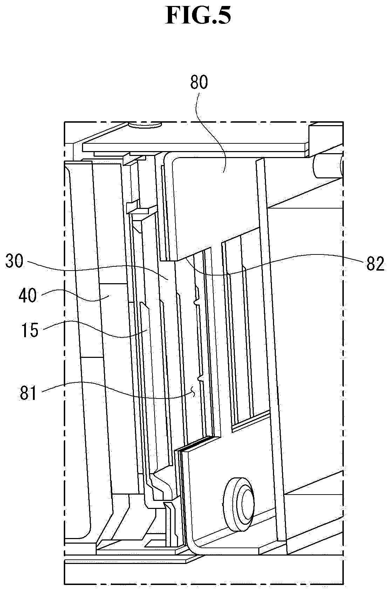

FIG. 5 is a perspective view illustrating the inside of a battery module including a bracket.

Referring to FIG. 5, the battery module 1 may include a bracket 80. The bracket 80 may face the bus bar unit 30. For example, the electrode lead 15 passing through the bus bar unit 30 may face the bracket 80 or may be directed toward the bracket 80.

The bracket 80 may form a discharge path through which the gas passing through the slits 31 of the bus bar unit 30 is discharged. For example, the bracket 80 may include a plurality of apertures 81 and an edge portion 82 surrounding the apertures 81.

The plurality of apertures 81 may form the discharge path of the gas. The gas passing through the slits 31 of the bus bar unit 30 may be discharged to the outside through the plurality of apertures 81.

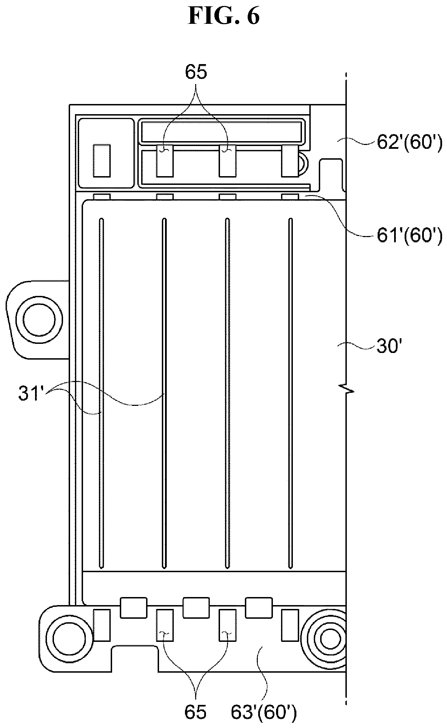

FIG. 6 illustrates a cross section of the battery module 1 (see FIG. 1). Referring to FIG. 6, a support frame 60' may be coupled to the module housing 20 and may support a bus bar unit 30'. The support frame 60' and the bus bar unit 30' may be disposed in the longitudinal direction of the battery cell 10. For example, the support frame 60' and the bus bar unit 30' may be disposed in the front-rear direction.

The support frame 60' may include a seating portion 61' on which the bus bar unit 30' is placed, an upper extension 62' extending upward from the seating portion 61', and a lower extension 63' extending downward from the seating portion 61'.

At least one of the upper extension 62' and the lower extension 63' may include a through hole 65 through which the gas is discharged to the outside. A plurality of through holes 65 may be provided. The plurality of through holes 65 may be disposed in each of the upper extension 62' and the lower extension 63'. However, a location of through holes 65 is not limited thereto.

The plurality of through holes 65 may be disposed to be spaced apart from each other. For example, the plurality of through holes 65 may be disposed parallel to a direction in which the plurality of slits 31 are disposed. The plurality of through holes 65 may be adjacent to the plurality of openings 41 (see FIG. 2). The gas passing through the openings 41 (see FIG. 2) may be easily discharged to the outside through the through holes 65. The plurality of through holes 65 may be disposed to correspond to the plurality of openings 41 (see FIG. 2), respectively.

The length of the opening 41 (see FIG. 2) in the transverse direction may be greater than a length of a slit 31' in the transverse direction. When thermal runaway occurs in the battery cell 10, the gas passing through the openings 41 (see FIG. 2) may be discharged to the outside through the slits 31' and/or the through holes 65.

In the present disclosure, the through holes 65 have been described and illustrated as the rectangular shape. However, the through holes 65 may be provided in a circular shape or provided in a polygonal shape such as a triangular shape or a pentagonal shape. In addition, the through holes 65 may be provided in various shapes through which the gas can pass.

Some embodiments or other embodiments of the present disclosure described above are not mutually exclusive or distinct from each other. Configurations or functions of some embodiments or other embodiments of the present disclosure described above can be used together or combined with each other.

## Claims

1. A battery module comprising:
a cell assembly including a plurality of battery cells, each of the plurality of battery cells including:
an electrode accommodation portion accommodating an electrode assembly; and
an electrode lead protruding from the electrode accommodation portion and coupled to the electrode assembly;
a module housing accommodating the cell assembly;
a bus bar unit including:
a plurality of slits in which the electrode leads are inserted respectively; and
a bus bar coupled to the electrode leads; and
a guide member positioned between the electrode accommodation portion and the bus bar unit, the guide member including a plurality of openings through which the electrode leads pass,
wherein the guide member fills a space between the electrode accommodation portion and the bus bar unit; and
wherein the guide member seals between the electrode leads of adjacent battery cells of the plurality of battery cells.

2. The battery module of claim 1, wherein the guide member is coupled to at least two battery cells of the plurality of battery cells.

3. The battery module of any one of claims 1 or 2, further comprising:
a heat blocking member accommodated in the module housing,
wherein the plurality of battery cells are grouped into a plurality of unit cell assemblies,
wherein the heat blocking member is disposed between adjacent unit cell assemblies of the plurality of unit cell assemblies, and
wherein the guide member includes a plurality of guide members, and the plurality of guide members are coupled to the plurality of unit cell assemblies, respectively.

4. The battery module of any one of claims 1 to 3, wherein the electrode lead in each of the plurality of battery cells forms a shape extending in a longitudinal direction in which the electrode lead protrudes from the electrode accommodation portion, and
wherein the plurality of battery cells are stacked in a thickness direction of each of the plurality of battery cells to form the cell assembly,

5. The battery module of claim 4, wherein a length of the slit in a transverse direction is greater than a length of the opening in the transverse direction.

6. The battery module of claim 4, wherein a length of the slit in a transverse direction is greater than a length of the electrode lead in the transverse direction.

7. The battery module of any one of claims 1 to 6, wherein the guide member includes at least one of a fiber, an epoxy resin, a mica sheet, a ceramic pad, and a flame retardant rubber.

8. The battery module of any one of claims 1 to 7, wherein the guide member includes a heat insulation material in the form of a gel.

9. The battery module of any one of claims 1 to 8, further comprising:
a support frame coupled to the module housing and supporting the bus bar unit, the support frame including a plurality of through holes.

10. The battery module of claim 9, wherein the support frame includes:
a seating portion on which the bus bar unit is placed;
an upper extension extending upward from the seating portion and
a lower extension extending downward from the seating portion,
wherein the plurality of through holes are formed in at least one of the upper extension and the lower extension

11. The battery module of claim 9 or 10, wherein the plurality of through holes correspond to the plurality of openings, respectively.

12. The battery module of any one of claims 1 to 11, further comprising:
a bracket coupled to the module housing, the bracket facing the bus bar unit, the bracket forming a discharge path through which a gas passing through the bus bar unit is discharged.

## Patentansprüche

1. Batteriemodul, umfassend:
eine Zellenanordnung mit einer Vielzahl von Batteriezellen, wobei jede der Vielzahl von Batteriezellen umfasst:
einen Elektrodenaufnahmeabschnitt, der eine Elektrodenanordnung aufnimmt;
und
eine Elektrodenleitung, die von dem Elektrodenaufnahmeabschnitt hervorsteht und mit der Elektrodenanordnung gekoppelt ist;
ein Modulgehäuse, das die Zellenanordnung aufnimmt;
eine Sammelschieneneinheit, umfassend:
eine Vielzahl von Schlitzen, in die die Elektrodenleitungen jeweils eingeführt sind; und
eine Sammelschiene, die mit den Elektrodenleitungen gekoppelt ist; und
ein Führungselement, das zwischen dem Elektrodenaufnahmeabschnitt und der Sammelschieneneinheit angeordnet ist, wobei das Führungselement eine Vielzahl von Öffnungen umfasst, durch die die Elektrodenleitungen verlaufen,
wobei das Führungselement einen Raum zwischen dem Elektrodenaufnahmeabschnitt und der Sammelschieneneinheit ausfüllt; und
wobei das Führungselement zwischen den Elektrodenleitungen benachbarter Batteriezellen der Vielzahl von Batteriezellen abdichtet.

2. Batteriemodul nach Anspruch 1, wobei das Führungselement mit mindestens zwei Batteriezellen der Vielzahl von Batteriezellen gekoppelt ist.

3. Batteriemodul nach einem der Ansprüche 1 oder 2, ferner umfassend:
ein Wärmeblockierelement, das im Modulgehäuse aufgenommen ist,
wobei die Vielzahl von Batteriezellen in einer Vielzahl von Einheitszellenanordnungen gruppiert ist, wobei das Wärmeblockierelement zwischen benachbarten Einheitszellenanordnungen der Vielzahl von Einheitszellenanordnungen angeordnet ist, und
wobei das Führungselement eine Vielzahl von Führungselementen umfasst und die Vielzahl von Führungselementen jeweils mit der Vielzahl von Einheitszellenanordnungen gekoppelt ist.

4. Batteriemodul nach einem der Ansprüche 1 bis 3, wobei die Elektrodenleitung in jeder der Vielzahl von Batteriezellen eine Form bildet, die sich in einer Längsrichtung erstreckt, in der die Elektrodenleitung von dem Elektrodenaufnahmeabschnitt hervorsteht, und
wobei die Vielzahl von Batteriezellen in einer Dickenrichtung jeder der Vielzahl von Batteriezellen gestapelt sind, um die Zellenanordnung zu bilden.

5. Batteriemodul nach Anspruch 4, wobei eine Länge des Schlitzes in einer Querrichtung größer ist als eine Länge der Öffnung in der Querrichtung.

6. Batteriemodul nach Anspruch 4, wobei die Länge des Schlitzes in einer Querrichtung größer ist als die Länge der Elektrodenleitung in der Querrichtung.

7. Batteriemodul nach einem der Ansprüche 1 bis 6, wobei das Führungselement eine Faser und/oder ein Epoxidharz und/oder ein Glimmerblatt und/oder ein Keramikelement und/oder einen flammhemmenden Gummi umfasst.

8. Batteriemodul nach einem der Ansprüche 1 bis 7, wobei das Führungselement ein Wärmeisoliermaterial in Form eines Gels umfasst.

9. Batteriemodul nach einem der Ansprüche 1 bis 8, ferner umfassend:
einen Tragrahmen, der mit dem Modulgehäuse gekoppelt ist und die Sammelschieneneinheit trägt, wobei der Tragrahmen eine Vielzahl von Durchgangslöchern umfasst.

10. Batteriemodul nach Anspruch 9, wobei der Tragrahmen umfasst:
einen Sitzabschnitt, auf dem die Sammelschieneneinheit platziert ist;
eine obere Verlängerung, die sich von dem Sitzabschnitt nach oben erstreckt, und
eine untere Verlängerung, die sich von dem Sitzabschnitt nach unten erstreckt,
wobei die Vielzahl von Durchgangslöchern in der oberen Verlängerung und/oder der unteren Verlängerung ausgebildet ist.

11. Batteriemodul nach Anspruch 9 oder 10, wobei die Vielzahl von Durchgangslöchern jeweils der Vielzahl von Öffnungen entspricht.

12. Batteriemodul nach einem der Ansprüche 1 bis 11, ferner umfassend:
eine mit dem Modulgehäuse gekoppelte Schiene, wobei die Schiene der Sammelschieneneinheit zugewandt ist und die Schiene einen Entladungsweg bildet, durch den ein durch die Sammelschieneneinheit strömendes Gas entladen wird.

## Revendications

1. Module de batterie comprenant :
un ensemble de cellules incluant une pluralité de cellules de batterie, chacune de la pluralité de cellules de batterie incluant :
une partie de logement d'électrodes accueillant un ensemble d'électrodes ; et
un fil d'électrode faisant saillie à partir de la partie de logement d'électrodes et couplé à l'ensemble d'électrodes ;
un boîtier de module accueillant l'ensemble de cellules ;
une unité de barre omnibus incluant :
une pluralité de fentes dans lesquelles les fils d'électrode sont insérés respectivement ; et
une barre omnibus couplée aux fils d'électrode ; et
un élément guide positionné entre la partie de logement d'électrodes et l'unité de barre omnibus, l'élément guide incluant une pluralité d'ouvertures à travers lesquelles les fils d'électrode passent,
dans lequel l'élément guide remplit un espace entre la partie de logement d'électrodes et l'unité de barre omnibus ; et
dans lequel l'élément guide assure l'étanchéité entre les fils d'électrode de cellules de batterie adjacentes de la pluralité de cellules de batterie.

2. Module de batterie selon la revendication 1, dans lequel l'élément guide est couplé à au moins deux cellules de batterie de la pluralité de cellules de batterie.

3. Module de batterie selon l'une quelconque des revendications 1 ou 2, comprenant en outre :
un élément de blocage de chaleur logé dans le boîtier de moule,
dans lequel la pluralité de cellules de batterie sont groupées en une pluralité d'ensembles de cellules unitaires,
dans lequel l'élément de blocage de chaleur est disposé entre des ensembles de cellules unitaires adjacents de la pluralité d'ensembles de cellules unitaires, et
dans lequel l'élément guide inclut une pluralité d'éléments guides, et la pluralité d'éléments guides sont couplés à la pluralité d'ensembles de cellules unitaires, respectivement.

4. Module de batterie selon l'une quelconque des revendications 1 à 3, dans lequel le fil d'électrode dans chacune de la pluralité de cellules de batterie forme une forme s'étendant dans une direction longitudinale dans laquelle le fil d'électrode fait saillie à partir de la partie de logement d'électrodes, et
dans lequel la pluralité de cellules de batterie sont empilées dans une direction d'épaisseur de chacune de la pluralité de cellules de batterie pour former l'ensemble de cellules.

5. Module de batterie selon la revendication 4, dans lequel une longueur de la fente dans une direction transversale est supérieure à une longueur de l'ouverture dans la direction transversale.

6. Module de batterie selon la revendication 4, dans lequel une longueur de la fente dans une direction transversale est supérieure à une longueur du fil d'électrode dans la direction transversale.

7. Module de batterie selon l'une quelconque des revendications 1 à 6, dans lequel l'élément guide inclut au moins l'un d'une fibre, d'une résine époxy, d'une feuille de mica, d'un tampon céramique, et d'un caoutchouc ignifuge.

8. Module de batterie selon l'une quelconque des revendications 1 à 7, dans lequel l'élément guide inclut un matériau d'isolation thermique sous la forme d'un gel.

9. Module de batterie selon l'une quelconque des revendications 1 à 8, comprenant en outre :
un cadre de support couplé au boîtier de module et supportant l'unité de barre omnibus, le cadre de support incluant une pluralité de trous traversants.

10. Module de batterie selon la revendication 9, dans lequel le cadre de support inclut :
une partie d'assise sur laquelle l'unité de barre omnibus est placée ;
une extension supérieure s'étendant vers le haut à partir de la partie d'assise et
une extension inférieure s'étendant vers le bas à partir de la partie d'assise,
dans lequel la pluralité de trous traversants sont formés dans au moins l'une de l'extension supérieure et de l'extension inférieure.

11. Module de batterie selon la revendication 9 ou 10, dans lequel la pluralité de trous traversants correspondent à la pluralité d'ouvertures, respectivement.

12. Module de batterie selon l'une quelconque des revendications 1 à 11, comprenant en outre :
un support couplé au boîtier de module, le support faisant face à l'unité de barre omnibus, le support formant un chemin d'évacuation à travers lequel un gaz traversant l'unité de barre omnibus est évacué.
